# EUROPÄISCHE PATENTSCHRIFT

(11) **EP 1 564 139 B1**
(45) Veröffentlichungstag und Bekanntmachung des Hinweises auf die Patenterteilung: **04.03.2015**
(21) Anmeldenummer: 05000967.9
(22) Anmeldetag: 19.01.2005
(51) Int. Cl.: B60N 2/44, B64D 11/06

(54) **Fluggastsitz**
Aircraft passenger seat
Siège pour passager d'aéronef

(30) Priorität: 03.02.2004 DE 102004005203
(43) Veröffentlichungstag der Anmeldung: 17.08.2005
(73) Patentinhaber: Recaro Aircraft Seating GmbH & Co. KG, 74523 Schwäbisch Hall (DE)
(72) Erfinder: Baumann, Jürgen, 78351 Bodman-Ludwigshafen (DE)
(74) Vertreter: Daub, Thomas

(56) Entgegenhaltungen:
- EP-A1- 0 107 882
- EP-A2- 1 078 852
- EP-A2- 1 116 653
- DE-U1- 8 708 102
- US-A- 5 352 020

## Beschreibung

Die Erfindung bezieht sich auf einen Fluggastsitz mit Sitzkomponenten wie Sitzteil, Rückenlehne und Beinauflage, die für eine Schwenkbewegung zwischen einer abgesenkten Stellung und angehobenen Stellungen an einer Drehlagerung am vorderen Randbereich des Sitzteiles angelenkt ist.

Fluggastsitze dieser Art sind bekannt, vgl. DE 100 03 407 A1, oder EP 1 116 653 A3, die den nächstliegenden Stand der Technik darstellt und den Oberbegriff des unabhängigen Anspruchs 1 offenbart. Bekanntermaßen ist es bei der Gestaltung der Bestuhlung von Luftfahrzeugen für die gewerbliche Luftfahrt ein vorrangiges Ziel, eine möglichst gute Ausnutzung des zur Verfügung stehenden Kabinenraumes zu erreichen. Für die Bauweise von Fluggastsitzen bedeutet dies, dass einstellbare Sitzkomponenten, wie anhebbare Beinauflagen, so auszubilden sind, dass sie bei Nichtbenutzung, also bei in abgesenkter Stellung befindlicher Beinauflage, einen möglichst großen, den Sitz umgebenden Freiraum (living-space) belassen, andererseits bei Benutzung, also bei der angehobenen Stellung der Beinauflage, für den Benutzer den gewünschten Komfort bieten.

Die Erfindung stellt sich die Aufgabe, einen Fluggastsitz zu schaffen, der diesen Anforderungen in besonderem Maße gerecht wird.

Bei einem Fluggastsitz der eingangs genannten Art ist diese Aufgabe erfindungsgemäß dadurch gelöst, dass die Beinauflage einen gelenkig mit dem Sitzteil verbundenen, langgestreckten Träger aufweist, längs dessen ein Beinauflagenpolster, das mit dem Koppelgetriebe verbunden ist, längs verschiebbar geführt ist.

Dadurch kann die Verschiebebewegung der Beinauflage relativ zu dem Sitzteil besonders einfach und vorteilhaft erreicht werden. Die beim Anheben der Beinauflage erfolgende Verschiebebewegung des Beinauflagenpolsters bringt letzteres nicht nur in die für den Komfort des Benutzers optimale Stellung, sondern ermöglicht es dadurch, dass sich das Beinauflagenpolster beim Anheben vom vorderen Bereich des Sitzteiles weg bewegt, dass dieser mit einem verhältnismäßig voluminösen Sitzpolster versehen werden kann, das sich über den vorderen Rand der Sitzträgerstruktur herum etwas nach unten erstreckt, so dass das vordere Ende der Schenkelauflage mit einer für den Benutzer besonders angenehmen weichen Polsterung versehen werden kann.

Die Schwenkbewegung der Beinauflage aus ihrer abgesenkten Stellung, also aus der Nicht-Gebrauchsstellung heraus, führt zu einer selbsttätigen Ausfahrbewegung und somit zu einer Verlängerung der wirksamen Länge bei Benutzung, obwohl die Beinauflage in der abgesenkten Stellung lediglich die kurze Baulänge entsprechend dem Abstand zwischen der Anlenkstelle am Sitzteil und dem Kabinenboden besitzt. In erstrebter Weise ist somit die erstrebte Kompaktheit bei Nichtgebrauch erreicht, während in der angehobenen Gebrauchsstellung eine den guten Sitzkomfort für den Sitzbenutzer ermöglichende Baulänge der Beinauflage zur Verfügung steht.

Vorzugsweise ist das Beinauflagenpolster an einem am Träger verschiebbar geführten Schlitten angebracht, an dessen dem Anlenkbereich des Trägers am Sitzteil nächstgelegenen Endbereich mindestens ein Gelenkhebel schwenkbar gelagert ist, der Teil des Koppelgetriebes bildet.

Hierbei kann die Anordnung so getroffen sein, dass der Träger der Beinauflage in seinen die Führung des Schlittens seitlich begrenzenden Seitenwänden je einen langgestreckten Führungsschlitz aufweist, in dem die ihn durchgreifende Gelenkachse je eines am Schlitten angelenkten Gelenkhebels verschiebbar geführt ist. Dadurch, dass an beiden Seiten der Führung des Schlittens je ein zum Koppelgetriebe gehörender Gelenkhebel angelenkt ist und somit die vom Koppelgetriebe erzeugte Verschiebekraft zu beiden Seiten der Führung in den Schlitten eingeleitet wird, ergibt sich keine Gefahr eines Verkantens des Schlittens in der Führung und somit eine besondere Leichtgängigkeit der Verschiebebewegung.

Das Koppelgetriebe kann für jeden Gelenkhebel einen zweiarmigen Hebel aufweisen, der auf einem Teil seiner Länge an der betreffenden Seitenwand angelenkt, mit seinem einen Hebelarm am Ende des betreffenden Gelenkhebels angelenkt und an seinem anderen Hebelarm an einem Arm eines dreiarmigen Winkelhebels angelenkt ist, der mit seinem zweiten Arm am Sitzteil und mit seinem dritten Arm an einem Kraftantrieb zur Erzeugung eines den Winkelhebel für eine Schwenkbewegung um seine Anlenkstelle am Sitzteil vorspannenden Drehmomentes angelenkt ist. Hierbei kann die Anordnung so getroffen sein, dass für die Übertragung des vom Kraftantrieb nur an einem Winkelhebel erzeugten Drehmomentes auf den anderen Winkelhebel beide Winkelhebel durch eine Verbindungsstange miteinander verbunden sind, deren Enden jeweils an der Vereinigungsstelle der drei Hebelarme des Winkelhebels angebracht sind.

Als Kraftantrieb kann ein eine Schubkraft erzeugender Linearantrieb vorgesehen sein, beispielsweise eine Gasdruckfeder.

In besonders vorteilhafter Weise können hierbei die relativen Winkelpositionen der Arme des Winkelhebels so gewählt sein, dass der mit dem Kraftantrieb verbundene Arm des Winkelhebels bei der abgesenkten Stellung der Beinauflage relativ zur Wirkungslinie der Schubkraft des Linearantriebes eine überzentrische Stellung einnimmt und bei Anheben der Beinauflage über die überzentrische Stellung hinaus bewegbar ist, so dass die Schubkraft ein das Anheben der Beinauflage bewirkendes Drehmoment am Winkelhebel erzeugt.

Bei dieser Anordnung übernimmt der Linearantrieb somit eine Doppelfunktion, indem bei der abgesenkten Stellung der Beinauflage ein diese kraftschlüssig in der abgesenkten Stellung sicherndes Drehmoment wirkt, während andererseits, wenn die Beinauflage aus der abgesenkten Stellung heraus bewegt wird, nach Überlaufen der überzentrischen Stellung am Winkelhebel ein im Sinne des Anhebens wirkendes Drehmoment erzeugt wird. Somit ergibt sich ein Höchstmaß an Bedienungsbequemlichkeit.

Nachstehend ist die Erfindung anhand eines in der Zeichnung dargestellten Ausführungsbeispieles im einzelnen erläutert. Es zeigen:
- Fig. 1 eine abgebrochen gezeichnete Seitenansicht, die nur den Bereich des Ausführungsbeispieles zeigt, in dem eine Beinauflage am vorderen Randbereich des Sitzteiles angelenkt ist, wobei die Polsterung des Sitzteiles weg gelassen ist und sich die Beinauflage in der abgesenkten, Nicht-Gebrauchsstellung befindet,
- Fig. 2 eine gegenüber Fig. 1 in kleinerem Maßstab gezeichnete Seitenansicht, wobei die Beinauflage in ganzer Länge und in aus der abgesenkten Stellung teilweise angehobenen Stellung gezeigt ist,
- Fig. 3 eine der Fig. 2 ähnliche Seitenansicht, wobei die Beinauflage abgebrochen und in ihrer vollständig angehobenen Stellung gezeigt ist, und
- Fig. 4 eine perspektivische Schrägansicht mit in angehobener Stellung befindlicher Beinauflage und ohne angezeichnetes Sitzpolster.

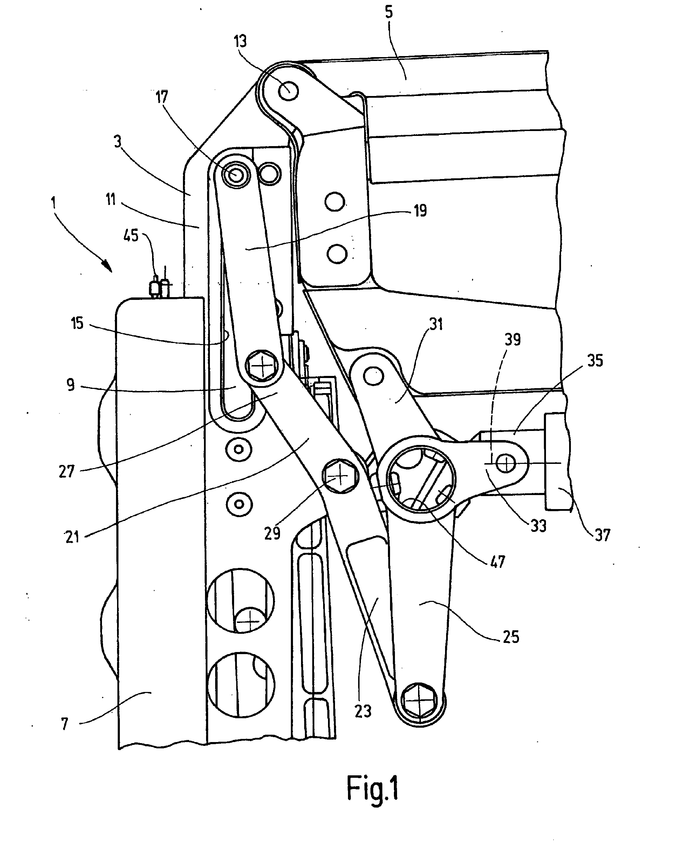

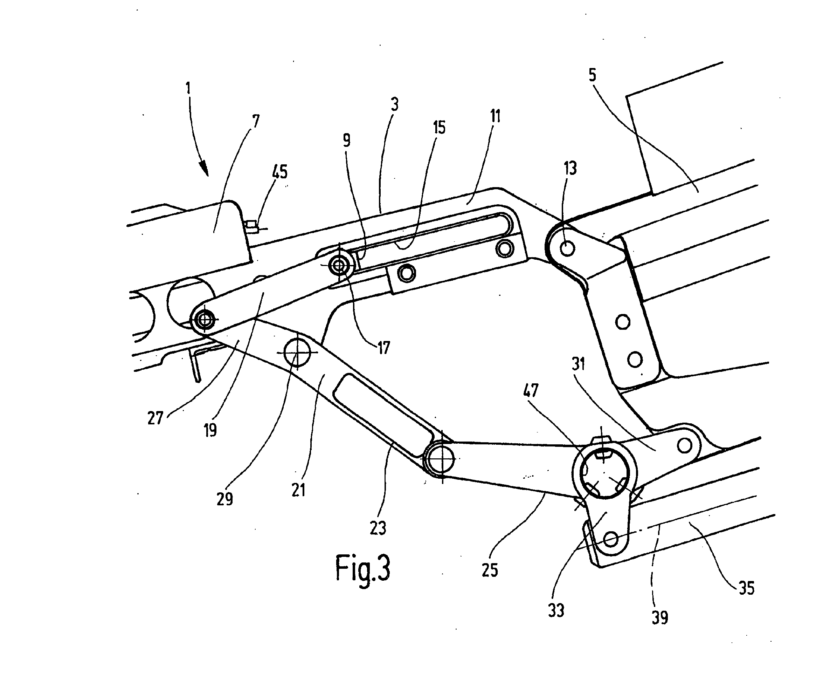

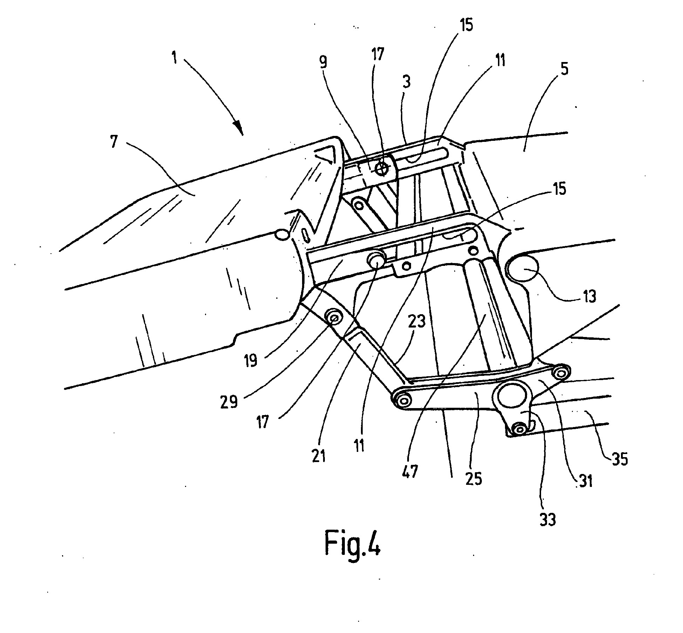

Eine als Ganzes mit 1 bezeichnete Beinauflage weist einen langgestreckten Träger 3 auf, der endseits am vorderen Randbereich des Sitzteiles 5 dles Fluggastsitzes angelenkt ist, wobei der Sitzteil 5 ohne Polsterauflage gezeigt ist. Der Träger 3 bildet eine Verschiebeführung für einen Schlitten 9, der das Beinauflagenpolster 7 trägt, so dass dieses längs des Trägers 3 bewegbar ist. Während die Fig. 1 bis 3 das Beinauflagenpolster 7 ohne Polsterüberzug zeigen, ist in Fig. 4 das Beinauflagenpolster 7 als mit Polsterüberzug eingehüllt gezeichnet.

Wie insbesondere aus Fig. 4 zu ersehen ist, ist der Träger 3 mit den Enden seiner beiden Seitenwände 11 an der Anlenkstelle 13 am Sitzteil 5 angelenkt. In jeder der Seitenwände 11 des Trägers 3 befindet sich ein langgestreckter Führungsschlitz 15, in denen jeweils ein den Schlitz 15 durchgreifender Gelenkbolzen 17 verschiebbar geführt ist, der die Gelenkachse bildet, mit der ein Gelenkhebel 19 als Antriebselement für die Verschiebebewegung am Schlitten 9 angelenkt ist.

Die beidseits am Schlitten 9 angelenkten Gelenkhebel 19 sind Teil eines Koppelgetriebes, zu dem je ein an jedem Gelenkhebel 19 angelenkter zweiarmiger Hebel 21 sowie ein an dessen zweiten Arm 23 angelenkter, dreiarmiger Winkelhebel 25 gehören. Der zweiarmige Hebel 21 ist zwischen seinen beiden Armen 23 und 27 bei 29 am Träger 3 angelenkt.

Außer dem mit dem zweiarmigen Hebel 21 verbundenen Arm weist der dreiarmige Winkelhebel 25 einen zweiten Arm 31 auf, der mit der Unterseite des Sitzteiles 5 gelenkig verbunden ist, sowie einen dritten Arm 33 auf, an dem die Schubstange 35 einer Gasdruckfeder 37 angelenkt ist.

Die Gasdruckfeder 37 ist an der nicht gezeigten Struktur des Fluggastsitzes gelenkig abgestützt, so dass die mit 39 bezeichnete Schubkraft-Wirkungslinie je nach Drehstellung des Winkelhebels 25 unterschiedliche Neigungen einnehmen kann. In Fig. 1 ist die Beinauflage 1 in der vollständig abgesenkten Stellung gezeigt. Bezogen auf das Drehzentrum des das Antriebselement des Koppelgetriebes bildenden Winkelhebels 25 hat die Wirkungslinie 39 hierbei eine überzentrische Ausrichtung, so dass, wie aus Fig. 1 entnehmbar ist, am Winkelhebel 25 ein Drehmoment entgegen dem Uhrzeigersinn erzeugt wird. Wie ersichtlich ist, wird dadurch die Beinauflage 1 kraftschlüssig in der abgesenkten Stellung gesichert.

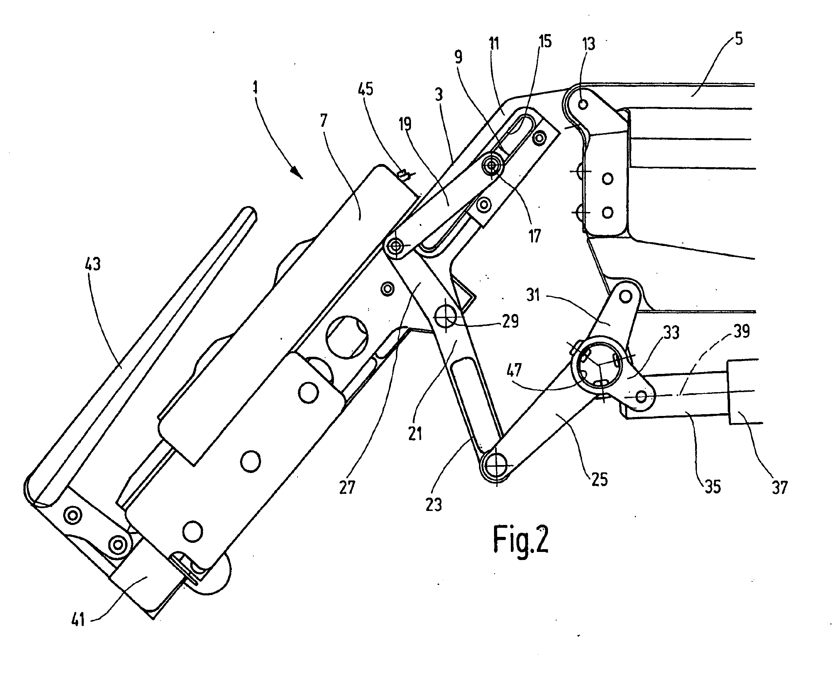

Wird die Beinauflage 1 aus der in Fig. 1 gezeigten Stellung manuell verschwenkt, d. h. in Richtung auf eine angehobene Stellung bewegt, siehe Fig. 2, dann ergibt sich für die Wirkungslinie 39 eine Neigung nach unten (bezogen auf die Fig.), wodurch nach Überlaufen der zentrischen Stellung ein Drehmoment im Uhrzeigersinne am Winkelhebel 25 wirkt, wodurch das Anheben der Beinauflage 1 bewirkt wird. Aufgrund der sich im Zuge dieser Bewegung ergebenden Schwenkbewegung des zweiarmigen Hebels 21 entgegen dem Uhrzeigersinn zieht der jeweils mitgenommene Gelenkhebel 19 den Gelenkbolzen 17 und damit den Schlitten 9 längs der Führungsschlitze 15 nach links (bezogen auf die Fig.), was zu einem Verfahren des Beinauflagenpolsters 7 und damit zu einer Vergrößerung des Abstandes von der Anlenkstelle 13 am Sitzteil 5 führt.

Fig. 2 zeigt, dass der Träger 3 der Beinauflage 1 nicht nur eine Führung für den Schlitten 9 des Beinauflagenpolsters 7 bildet, sondern auch den Träger für eine Fußstützenanordnung 41 mit abklappbarer Fußauflage 43. Die Fußstützenanordnung 41 ist ebenfalls im Träger 3 längs verschiebbar geführt und durch eine nicht gezeigte, elektromotorische, innerhalb des Trägers 3 befindliche Antriebseinrichtung ausfahrbar. In den Fig. 1 bis 3 sind lediglich Anschlußeinrichtungen 45 für die elektromotorische Antriebseinrichtung angedeutet.

Wie bereits erwähnt, wird die Kraft für die Verschiebebewegung des Schlittens 9 zu beiden Seiten des Trägers 3 über einen betreffenden Gelenkhebel 19, einen zweiarmigen Hebel 21und einen dreiarmigen Winkelhebel 25 in den Schlitten 9 eingeleitet. Die Übertragung des Antriebsdrehmomentes von demjenigen dreiarmigen Winkelhebel 25 der mit der Gasdruckfeder 37 gekoppelt ist, auf den anderen Winkelhebel 25 erfolgt über eine nur in Fig. 4 sichtbare Verbindungsstange in Form eines Verbindungsrohres 47, das sich zwischen den Winkelhebeln 25 erstreckt und mit diesen jeweils an der Vereinigungsstelle ihrer Hebelarme verbunden ist.

Bei dem vorliegenden Beispiel ist eine Gasdruckfeder 37 als nicht schaltbarer Kraftantrieb vorgesehen, so dass die Beinauflage bei Nichtgebrauch manuell gegen die wirkende Anhebekraft in die abgesenkte Stellung zurück zu bewegen ist. Es versteht sich, dass alternativ andersartige Kraftantriebe, beispielsweise in schaltbarer Form, vorgesehen sein könnten.

## Patentansprüche

1. Fluggastsitz mit Sitzkomponenten wie Sitzteil (5), Rückenlehne und Beinauflage (1), die für eine Schwenkbewegung zwischen einer abgesenkten Stellung und angehobenen Stellungen an einer Drehlagerung (13) am vorderen Randbereich des Sitzteiles (5) angelenkt ist, wobei zwischen Sitzteil (5) und Beinauflage (1) ein mechanisches Koppelgetriebe (19, 21, 25) angeordnet ist, das die Schwenkbewegung der Beinauflage (1) in eine relativ zum Sitzteil (5) erfolgende Verschiebebewegung zumindest eines Teiles (7) der Beinauflage (1) umsetzt, **dadurch gekennzeichnet, dass** die Beinauflage (1) einen gelenkig mit dem Sitzteil (5) verbundenen, langgestreckten Träger (3) aufweist, längs dessen ein Beinauflagenpolster (7), das mit dem Koppelgetriebe (19, 21, 25) verbunden ist, längs verschiebbar geführt ist.

2. Fluggastsitz nach Anspruch 1, **dadurch gekennzeichnet, dass** das Beinauflagenpolster (7) an einem am Träger (3) verschiebbar geführten Schlitten (9) angebracht ist, an dessen dem Anlenkbereich des Trägers (3) am Sitzteil (5) nächstgelegenen Endbereich mindestens ein Gelenkhebel (19) schwenkbar gelagert ist, der Teil des Koppelgetriebes bildet.

3. Fluggastsitz nach Anspruch 2, **dadurch gekennzeichnet, dass** der Träger (3) der Beinauflage (1) in seinen die Führung des Schlittens (9) seitlich begrenzenden Seitenwänden (11) je einen langgestreckten Führungsschlitz (15) aufweist, in dem die ihn durchgreifende Gelenkachse (17) je eines am Schlitten (9) angelenkten Gelenkhebels (19) verschiebbar geführt ist.

4. Fluggastsitz nach Anspruch 3, **dadurch gekennzeichnet, dass** das Koppelgetriebe für jeden Gelenkhebel (19) einen zweiarmigen Hebel (21) aufweist, der auf einem Teil seiner Länge an der betreffenden Seitenwand (11), mit seinem einen Hebelarm (27) an Ende des betreffenden Gelenkhebels (19) angelenkt und an seinem anderen Hebelarm (23) an einem Arm eines dreiarmigen Winkelhebels (25) angelenkt ist, der mit seinem zweiten Arm (31) am Sitzteil (5) und mit seinem dritten Arm (33) an einem Kraftantrieb (37) zur Erzeugung eines den Winkelhebel (25) für eine Schwenkbewegung um seine Anlenkstelle am Sitzteil (5) vorspannenden Drehmomentes angelenkt ist.

5. Fluggastsitz nach Anspruch 4, **dadurch gekennzeichnet, dass** beide Winkelhebel (25) durch eine Verbindungsstange (47) miteinander verbunden sind, deren Enden jeweils an der Vereinigungsstelle der Hebelarme (31, 33) des Winkelhebels (25) angebracht sind.

6. Fluggastsitz nach Anspruch 5, **dadurch gekennzeichnet, dass** als Kraftantrieb ein eine Schubkraft erzeugender Linearantrieb (35, 37) vorgesehen ist.

7. Fluggastsitz nach Anspruch 6, **dadurch gekennzeichnet, dass** der mit dem Kraftantrieb (37) verbundene Arm (33) des Winkelhebels (25) bei der abgesenkten Stellung der Beinauflage (1) relativ zur Wirkungslinie (39) der Schubkraft eine überzentrische Stellung einnimmt und bei Anheben der Beinauflage (1) über die überzentrische Stellung hinaus bewegbar ist, so dass die Schubkraft ein das Anheben der Beinauflage (1) bewirkendes Drehmoment am Winkelhebel (25) erzeugt.

8. Fluggastsitz nach Anspruch 7, **dadurch gekennzeichnet, dass** als Kraftantrieb eine Gasdruckfeder (32) vorgesehen ist.

## Claims

1. Aircraft passenger seat with seat components like a seat part (5), a backrest and a legrest (1), which is articulated to a rotary bearing (13) at a front edge region of the seat part (5) for a pivoting movement between a lowered position and lifted positions, wherein, between the seat part (5) and the legrest (1), a mechanical linkage (19, 21, 25) is arranged, which converts the pivoting movement of the legrest (1) into a shifting movement of at least a part (7) of the legrest (1), effected with respect to the seat part (5), **characterized in that** the legrest (1) comprises an elongated carrier (3) which is connected to the seat part (5) in an articulated manner, along a length of which carrier (3) a legrest cushioning (7), which is connected to the mechanical linkage (19, 21, 25), is guided in a lengthwise slideable manner.

2. Aircraft passenger seat according to claim 1, **characterized in that** the legrest cushioning (7) is arranged at a sled (9) that is slideably guided at the carrier (3), at an end region of which sled (9) situated next to the articulation region of the carrier (3) at the seat part (5), at least one articulated lever (19) is pivotably supported, which is part of the mechanical linkage (19, 21, 25).

3. Aircraft passenger seat according to claim 2, **characterized in that** the carrier (3) of the legrest (1) comprises an elongated guiding slit (15) in each of its lateral walls (11) which laterally delimit the guidance of the sled (9), in which guiding slit (15) the articulate axis (17) of a respective articulate lever (19) articulated to the sled (9), which articulate axis (17) reaches through the sled (9), is slideably guided.

4. Aircraft passenger seat according to claim 3, **characterized in that** the mechanical linkage comprises for each articulate lever (19) a two-arm lever (21), which is articulated, on a portion of its length at the corresponding lateral wall (11), with its one lever arm (27) to an end of the respective articulate lever (19) and is articulated with its other lever arm (23) to an arm of a three-arm angle lever (25) which is articulated with its second arm (31) to the seat part (5) and with its third arm (33) to a power drive (37) for generating a torque pre-tensioning the angle lever (25) for a pivoting movement about its articulation point at the seat part (5).

5. Aircraft passenger seat according to claim 4, **characterized in that** both angle levers (25) are connected to each other by means of a connecting rod (47), the ends of which are respectively arranged at the jointure point of the lever arms (31, 33) of the angle lever (25).

6. Aircraft passenger seat according to claim 5, **characterized in that** a linear drive (35, 37) generating a thrust is provided as a power drive.

7. Aircraft passenger seat according to claim 6, **characterized in that** the arm (33) of the angle lever (25) which is connected to the power drive (37) assumes an over-centred position in a lowered position of the legrest (1) with respect to the line of action (39) of the thrust, and is moveable beyond the over-centred position in a lifting the legrest (1), such that the thrust generates at the angle lever (25) a torque causing the lifting of the legrest (1).

8. Aircraft passenger seat according to claim 7, **characterized in that** a gas compression spring (32) is provided as a power drive.

## Revendications

1. Siège pour passager d'aéronef, avec des composants de siège, comme part assise (5), dossier et repose-jambe (1), lequel est articulé à un palier rotatif (13) à la région avant marginale de la part assise (5) pour un mouvement pivotant entre une position abaissée et des positions soulevées, un entraînement de couplage (19, 21, 25) mécanique disposé entre part assise (5) et repose-jambe (1) convertissant le mouvement pivotant du repose-jambe (1) dans un mouvement déplaçant, effectué relatif à la part assise (5), d'au moins une part (7) du repose-jambe (1), **caractérisé en ce que** le repose-jambe (1) présente un porteur (3) rallongé qui est connecté articulièrement avec la part assise (5), le long de lequel porteur (3) un rembourrage du repose-jambe (7) connecté avec l'entraînement de couplage (19, 21, 25) est guidé de sorte qu'il est déplaçable longitudinalement.

2. Siège pour passager d'aéronef selon la revendication 1, **caractérisé en ce que** le rembourrage du repose-jambe (7) est monté à un chariot (9) guidé déplaçablement au porteur (3), au moins un levier articulé (19) qui forme part de l'entraînement de couplage, étant supporté pivotablement à la région extrême duquel chariot (9), laquelle est la plus prochaine à la région d'articulation du porteur (3) à la part assise (5).

3. Siège pour passager d'aéronef selon la revendication 2, **caractérisé en ce que** le porteur (3) du repose-jambe (1) présente, dans chacune de ses parois latérales (11) délimitant le guidage du chariot (9) latéralement, une fente de guidage (15) rallongée, dans laquelle est guidé displaçablement l'axe articulé (17) d'un respectif levier articulé (19) articulé au chariot (9), lequel axe articulé (17) ayant prise par ladite fente de guidage (15).

4. Siège pour passager d'aéronef selon la revendication 3, **caractérisé en ce que** l'entraînement de couplage présente pour chacun des leviers articulés (19) un levier (21) à deux bras lequel est articulé, sur une portion de sa longueur à la paroi latérale (11) respective, avec l'un de ses bras de levier (27) à un bout du levier articulé (19) respectif et avec l'autre de ses bras de levier (23) à un bras d'un levier angulaire (25) à trois bras, lequel levier angulaire (25) étant articulé à la part assise (5) avec son deuxième bras (31) et avec son troisième bras (33) à un entraînement de force (37) afin de générer un torque précontraignant le levier angulaire (25) pour un mouvement pivotant autour de son point d'articulation à la part assise (5).

5. Siège pour passager d'aéronef selon la revendication 4, **caractérisé en ce que** les deux leviers angulaires (25) sont joints par une barre de connexion (47), les buts de laquelle sont montés respectivement au point de jonction des bras de levier (31, 33) du levier angulaire (25).

6. Siège pour passager d'aéronef selon la revendication 5, **caractérisé en ce qu'**un entraînement linéaire (35, 37) générant une force de poussée est prévue comme l'entraînement de force.

7. Siège pour passager d'aéronef selon la revendication 6, **caractérisé en ce que** le bras (33) du levier angulaire (25), connecté avec l'entraînement de force (37) prend, dans la position abaissée du repose-jambe (1) relatif à la ligne d'action (39) de la force de poussée, une position hyper-centrique et est, avec soulèvement du repose-jambe (1), movible au-delà de la position hyper-centrique, en sorte que la force de poussée produit au levier angulaire (25) un torque causant le soulèvement du repose-jambe (1).

8. Siège pour passager d'aéronef selon la revendication 7, **caractérisé en ce qu'**un ressort à gaz (32) est prévu comme entraînement de force.
